# EUROPÄISCHE PATENTANMELDUNG

(11) **EP 3 848 309 A1**
(43) Veröffentlichungstag der Anmeldung: **14.07.2021**
(21) Anmeldenummer: 20150660.7
(22) Anmeldetag: 08.01.2020
(51) Int. Cl.: B65G 60/00, B65G 1/137, B65G 57/18, B65G 1/04, B25J 5/00

(54) **VERFAHREN UND EINRICHTUNG ZUR KOMMISSIONIERUNG VON SCHWERLASTGÜTERN**

(71) Anmelder: Lutec GmbH Verwaltungs- und Beteiligungsgesellschaft, 49424 Goldenstedt-Lutten (DE)
(72) Erfinder: Lüers, Gregor, 49424 Goldenstedt-Lutten (DE)
(74) Vertreter: Meyer, Ludgerus

(57) **Zusammenfassung**

Die Erfindung betrifft ein Verfahren zur Kommissionierung von langgestreckten Schwerlastgütern, insbesondere Rohren (2 - 5), die palettenweise auf einem Lagerplatz (1) angeordnet sind, und mittels einer Ladeeinrichtung (7) einzeln von einer Palette entnommen und seriell auf eine Sammelpalette überführt werden, wobei die Sammelpalette nach Beendigung des Auftrag zur Kommissionierung an ein Ausgangslager überführt wird. Erfindungsgemäß sind die Schwerlastgüter auf dem Lagerplatz (1) nach Typen sortiert in wenigstens einer langgestreckten Reihe von Stellplätzen gelagert. Die Ladeeinrichtung (7) ist parallel zur Reihe der Stellplätze (1) verfahrbar und enthält einen Aufnahmebereich, der eine Sammelpalette aufnimmt, auf die nacheinander von den Stellplätzen entnommene Schwerlastgüter mit Hilfe der Ladeeinrichtung (7) überführt werden. Die Ladeeinrichtung (7) ist ausgestaltet, um eine beladene Sammelpalette an ein Ausgangslager zu überführen und an das Ausgangslager abzugeben. Ferner betrifft die Erfindung eine Einrichtung zur Durchführung eines derartigen Verfahrens. (Fig. 1)

## Beschreibung

Die Erfindung bezieht sich auf ein Verfahren zur Kommissionierung von langgestreckten Schwerlastgütern, insbesondere Rohren großen Durchmessers und Gewichts, sowie eine Einrichtung zur Durchführung eines derartigen Verfahrens.

Im Bereich der Kommissionierung von Lager-Gütern sind verschiedene Kommissionierungsverfahren bekannt. Bei der einstufigen Kommissionierung in Form einer seriellen Kommissionierung werden Bestellvorgänge nach Aufträgen sukzessive abgearbeitet, indem ein Kommissionierer alle Lagerzonen nacheinander durchläuft und die zusammengestellte Ware an einen Sammelplatz übergibt. Bei einer parallelen Kommissionierung werden die Aufträge parallel in verschiedenen Lagerzonen gleichzeitig abgearbeitet und der Gesamtauftrag wird erst am Lagerplatz zusammengestellt.

Für Schwerlastgüter, insbesondere Rohre großen Durchmessers und Gewichts, die in größeren Stückzahlen angefordert werden, ist es üblich, diese Güter palettenweise mittels Gabelstapler vom Lagerplatz zu einem Ausgangslager zu überführen. Für die Abwassertechnik werden Rohre vielfach mit Nennweiten von 110 bis 600 mm bei einer Länge von 1 - 6 m benötigt, deren Einzel-Gewicht bis zu 300 kg betragen kann, aber gleichwohl im Verhältnis zu ihrer Größe nur ein relativ geringes Volumengewicht haben.

Bei Kleinaufträgen oder Aufträgen mit einer Anzahl von Rohren, die eine Palette nicht vollständig befüllen, oder bei denen unterschiedliche Typen von Rohren zusammenzustellen sind, erfolgt die Kommissionierung häufig von Hand oder mittels eines Gabelstaplers, der die Rohre im Lager einzeln aufnimmt und auf einem Kommissionier-Platz zusammenstellt. Der erforderliche Zeitaufwand zur Zusammenstellung derartiger Aufträge ist erheblich und häufig mit Muskelkraft verbunden. Ferner ergeben sich durch die individuelle Handhabung leicht Beschädigungen an den Produkten.

Der Erfindung liegt daher die Aufgabe zugrunde, ein Verfahren und eine Einrichtung zur Kommissionierung von langgestreckten Schwerlastgütern anzugeben, wobei der Zeitaufwand zur Zusammenstellung der Güter verringert wird, Schäden an den Gütern vermieden werden und eine manuelle Tätigkeit reduziert werden kann.

Diese Aufgabe wird durch ein Verfahren nach Anspruch 1 und eine Einrichtung nach Anspruch 6 gelöst. Weitergehende Merkmale der Erfindung sind in Unteransprüchen angegeben.

Die Erfindung geht aus von einem Verfahren zur Kommissionierung von langgestreckten Schwerlastgütern, insbesondere Rohren, die palettenweise auf einem Lagerplatz angeordnet sind und die mittels einer Ladeeinrichtung einzeln von einer Palette entnommen und seriell auf eine Sammelpalette überführt werden. Die Sammelpalette wird dann an ein Ausgangslager überführt oder sofort auf einen LKW geladen.

Erfindungsgemäß werden die auf dem Lagerplatz in einer langgestreckten Reihe nach Typen sortiert gelagerten Schwergüter von einer Ladeeinrichtung aufgenommen, die parallel zur Reihe der Lagerplätze verfahrbar ist. Diese enthält einen Aufnahmebereich, der eine Sammelpalette aufnimmt, auf die nacheinander von den Lagerplätzen aufgenommene Schwerlastgüter abgelegt werden. Die Ladeeinrichtung ist so ausgestaltet, dass sie eine beladene Sammelpalette an ein Ausgangslager abgeben kann.

Bei der Erfindung werden die Schwerlastgüter daher entsprechend einem Kommissionierauftrag mittels einer Ladeeinrichtung einzeln aufgenommen und auf eine Sammelpalette überführt, die auf der Ladeeinrichtung angeordnet ist. Nachdem die Sammelpalette gefüllt oder ein Auftrag abgearbeitet ist, bringt die Ladeeinrichtung die Sammelpalette zu einem Ausgangslager oder sie wird auf einen LKW geladen.

Vorzugsweise ist die Ladeeinrichtung ein an sich bekannter Seitenstapler, der in Längs- und Querrichtung verfahrbar ist. Die Ladeeinrichtung enthält vorzugsweise eine in einer vertikalen und horizontalen Ebene bewegbare Aufnahmevorrichtung, insbesondere in der Art eines Ladekrans, der am äußeren Ende eine Greifvorrichtung zur Aufnahme der Schwerlastgüter aufweist, mit deren Hilfe die Schwerlastgüter angehoben und auf die Sammelpalette überführt werden können.

Die Greifvorrichtung kann ohne händische Umbaumaßnahmen hydraulisch oder elektrisch auf den Durchmesser des jeweils aufzunehmenden Rohres eingestellt werden, so dass verschiedene Rohrdurchmesser und Rohrlängen ergriffen werden können.

Zur Abgabe einer Sammelpalette an das Ausgangslager wird vorzugsweise die an einem Seiten- oder Gabelstapler standardmäßig vorhandene Hubeinrichtung, verwendet, z.B. eine Hubgabel.

Die Beweglichkeit der Aufnahmevorrichtung wird vorzugsweise dadurch erreicht, dass diese auf einer ausreichend dimensionierten Tragfläche des Seitenstaplers über ein Drehlager befestigt ist.

Die genannten Paletten können als Standardpaletten ausgebildet sein. Für Schwerlastgüter in Form von Rohren sind die Paletten vorzugsweise als U-förmige aus einem Kantholz unten und zwei Seitenhölzern sowie einem Deckbrett bestehende einen Rohrstapel umgreifende Holzrahmen gebildet, wobei je nach Länge des Rohrstapel zwei bis vier Holzrahmen verwendet werden.

Die Erfindung eignet sich insbesondere für die Kommissionierung von Rohren größeren Durchmessers, aber sie ist in gleicher Weise für andere langgestreckte Schwerlastgüter, wie Stangen, Balken, Träger, verwendbar.

Die Erfindung wird nachstehend an Hand eines Ausführungsbeispiels näher erläutert. In den beigefügten Figuren zeigen:
- Fig. 1: einen modellartig dargestellten Lagerplatz mit einer Ladeeinrichtung, und
- Fig. 2: eine isometrisch dargestellte Ladeeinrichtung.

Die nachstehende Beschreibung bezieht sich beispielhaft auf die Kommissionierung von Rohren, aber umfasst in gleicher Weise Stangen, Balken, Träger.

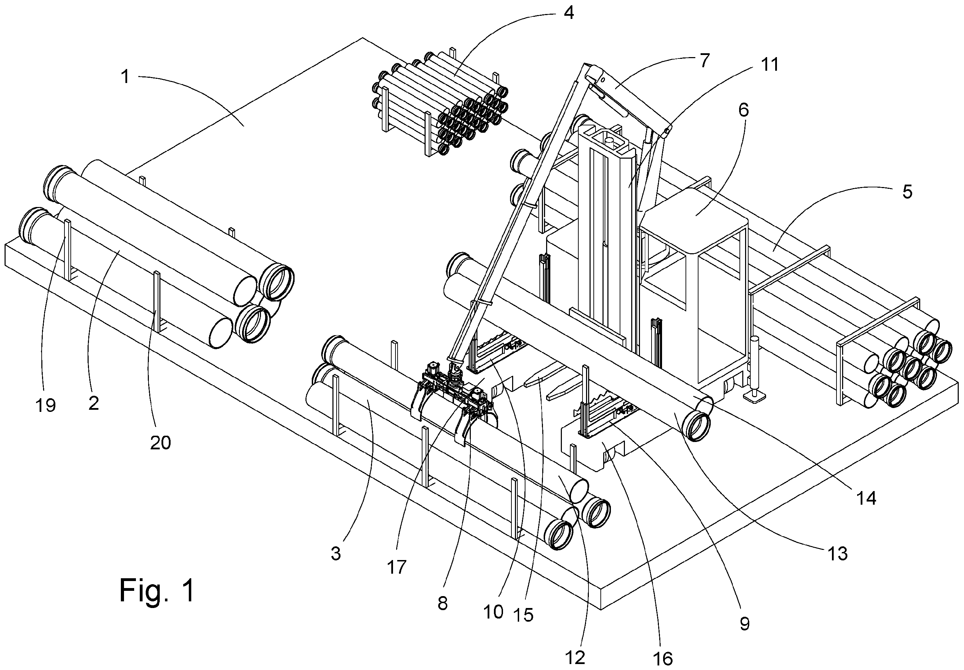

Figur 1 zeigt einen Lagerplatz 1, auf dem zwei Reihen von Rohrstapeln 2, 3 und 4, 5 parallel zueinander mit einer dazwischen verbleibenden Fahrgasse dargestellt sind. Die Reihen können beliebig verlängert werden, je nach vorhandenen Rohrtypen oder Rohrlängen. Jeweils ein Rohrtyp mit einer Rohrlänge bildet eine Palette bzw. einen Rohrstapel, die auf Stellplätzen abgestellt sind. Es können an jeder Seite der Fahrgasse auch mehrere parallele Reihen von Paletten angeordnet werden, sofern die Reichweite der Ladeeinrichtung zu allen Reihen Zugriff hat.

Der Zusammenhalt der Rohre einer Palette wird dadurch erreicht, dass die Rohre in zwei bis vier Holzrahmen aufgenommen sind. Diese Holzrahmen bestehen aus vier ein Quadrat bildende Hölzer 19, 20, die mittels eines die Latten umgreifenden Kunststoffbandes zusammengehalten werden. Alternativ können auch Standardpaletten verwendet werden, bei denen die Rohrseiten stützende Seitenträger vorhanden sind. Anstelle der Verwendung eines Kunststoffbandes können die Hölzer eines Rahmens auch durch Winkelbleche an den Enden zusammengehalten werden.

Bevor Rohre aus den Paletten entnommen werden können, werden die den Holzrahmen umgreifende Kunststoffbänder entfernt, wobei der U-förmige Rahmen erhalten bleibt. Die jeweils obere Decklatte des Rahmens wird dann abgenommen.

In der Fahrgasse zeigt Figur 1 einen Seitenstapler 6, der zusätzlich zur Bewegungsmöglichkeit eines standardmäßigen Gabelstaplers sich auch in Querrichtung bewegen kann. Der Seitenstapler 6 enthält eine vertikal und horizontal bewegbare Hubvorrichtung 11 mit einer Hubgabel 15 zum Anheben von Gütern. Die Hubgabel 15 befindet sich zwischen zwei seitlichen Traversen 16 und 17, die einen Aufnahmebereich für eine Sammelpalette bilden, die auch hier durch zwei lattenförmige U-förmige Halter eines Holzrahmens mit Seitenhölzern 19 und 20 gebildet ist und auf den Traversen 16 und 17 aufgebaut sind.

Das Kommissionierverfahren wird wie folgt durchgeführt: Auf dem Lagerplatz 1 werden zunächst eine oder mehrere Reihen von Paletten oder Rohrstapeln abgestellt, die jeweils einen Rohrtyp und eine Rohrlänge enthalten. Dann werden nach Entfernung des den Holzrahmen umgreifenden Kunststoffbandes die oberen Querlatten der Holzrahmen der Rohrstapel entfernt. Zur Aufnahme von Rohren aus einem Stapel wird der Seitenstapler nun in Längsrichtung zu dem jeweiligen Stapel gefahren und ein Greifer 8 am Ende einer als Ladekran ausgebildeten Aufnahmevorrichtung 7 des Seitenstaplers 6 entnimmt einem Rohrstapel ein Rohr 12, das mittels des Ladekrans auf die Sammelpalette überführt wird, die auf dem Aufnahmebereich des Seitenstaplers 6 angeordnet ist. Das Rohr 12 wird dadurch neben den dort bereits zuvor abgelegten Rohren 13 und 14 abgelegt. Wenn danach ein Rohr z.B. aus dem Rohrpaket 2 entnommen werden soll, fährt der Seitenstapler entlang der Reihe der Rohrpakete zum Rohrpaket 2, entnimmt ein oder mehrere Rohre aus dem Rohrpaket 2 und übergibt diese wiederum auf den Aufnahmebereich des Seitenstaplers. Wenn ein Rohr aus einem der Rohrpakete 4 und 5 entnommen werden soll, fährt der Seitenstapler an das Ende des Lagerplatzes 1, wendet dort und fährt zurück an die Stelle, an der ein Rohr aus dem Rohrpaket 4 oder 5 zu entnehmen ist.

Nach Beendigung eines Auftrags oder nachdem eine Sammelpalette vollständig gefüllt ist, fährt der Seitenstapler mit aufgeladener Sammelpalette zunächst zu einem Arbeitsplatz, an dem die Decklatte aufgelegt und der Stapel umreift wird, bevor er zum Ausgangslager befördert wird. Dort wird die Sammelpalette mit Hilfe der Hubeinrichtung 11 des Seitenstaplers angehoben und an das Ausgangslager abgegeben oder auf einen LKW verladen. Auf dem Rückweg zum Lagerplatz kann der Seitenstapler 6 eine volle Palette aus einem Arbeitslager abholen und den Lagerplatz wieder ergänzen.

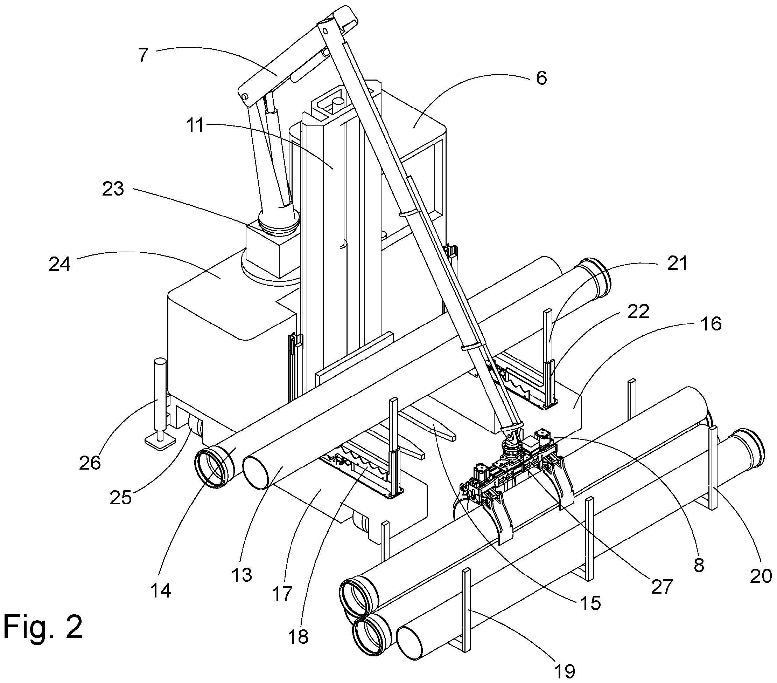

Figur 2 zeigt den Seitenstapler 6 in vergrößerter Darstellung. Dieser enthält die Aufnahmevorrichtung 7, die als hydraulisch betätigter Ladekran gestaltet ist und Gelenkverbindungen enthält, die eine Bewegung in einer vertikalen Ebene erlauben. Zusätzlich kann eine Teleskoperstreckung zur Erreichung einer größeren Reichweite verwendet werden. Am vorderen Ende des Ladekrans 7 befindet sich ein hydraulisch oder elektrisch betätigbarer Greifer 8, der wenigstens in einer horizontalen Ebene mittels einer Drehvorrichtung 27 drehbar ausgestaltet und im Greifdurchmesser elektrisch oder pneumatisch einstellbar ist. Um auch in Umfangsrichtung operieren zu können, ist der Ladekran 7 auf einer Tragfläche 24 des Seitenstaplers mittels eines Drehlagers 23 befestigt.

Sofern der Ladekran 7 ausreichend dimensioniert ist und sich oberhalb oder seitlich des Seitenstaplers 6 kein Hindernis befindet, kann der Ladekran 7 auch um 180° in der horizontalen Ebene gedreht werden, so dass auch Rohre von der rückwärtigen Seite des Seitenstaplers aufgenommen und nach Rückdrehung des Ladekrans 7 auf der Sammelpalette abgelegt werden können. Damit kann auf ein Herausfahren des Seitenstaplers 6 aus der Fahrgasse verzichtet werden, wenn die rückwärtige Reihe der Rohrstapel bedient werden soll.

Damit die auf der Sammelpalette abgelegten Rohre ihre Position auch bei Bewegung des Seitenstaplers 6 behalten, sind parallel zu den unteren Querlatten 9, 10 der Sammelpalette sägezahnartige Halteschienen 18 angeordnet, die eine seitliche Verschiebung aufgelegter Rohre verhindern. Zur Abstützung der Seitenhölzer 21 einer Palette sind die Seitenhölzer in Stützschienen 22 aufgenommen.

Der Seitenstapler 6 ist über Räder 25 verfahrbar. Um eine ausreichende Stabilität bei Aufnahme von besonders schweren Rohren zu gewährleisten, können an den Ecken des Seitenstaplers 6 ausfahrbare Stützen 26 genutzt werden.

Die Steuerung des Ladekrans 7 kann von der Fahrerkabine des Seitenstaplers aus erfolgen. Bevorzugt ist allerdings eine Funk-Fernbedienung mittels eines Handsteuergeräts.

### Bezugszeichen

- 1: Lagerplatz
- 2: Rohrpaket auf Palette
- 3: Rohrpaket auf Palette
- 4: Rohrpaket auf Palette
- 5: Rohrpaket auf Palette
- 6: Seitenstapler, Ladeeinrichtung
- 7: Aufnahmevorrichtung, Ladekran
- 8: Greifer
- 9: Querlatte
- 10: Querlatte
- 11: Hubvorrichtung
- 12: Rohr
- 13: Rohr
- 14: Rohr
- 15: Hubgabel
- 16: Traverse
- 17: Traverse
- 18: Halteschiene
- 19: Seitenholz
- 20: Seitenholz
- 21: Seitenholz
- 22: Stützschiene
- 23: Drehlager
- 24: Tragfläche
- 25: Rad
- 26: Stütze
- 27: Drehvorrichtung

## Patentansprüche

1. Verfahren zur Kommissionierung von langgestreckten Schwerlastgütern, insbesondere Rohren (2-5), die palettenweise auf einem Lagerplatz (1) angeordnet sind, und mittels einer Ladeeinrichtung (6) einzeln von einer Palette entnommen und seriell auf eine Sammelpalette überführt werden, wobei die Sammelpalette nach Beendigung des Auftrag zur Kommissionierung an ein Ausgangslager überführt wird, **dadurch gekennzeichnet,**
**dass** die Schwerlastgüter auf dem Lagerplatz (1) nach Typen sortiert in wenigstens einer langgestreckten Reihe von Stellplätzen gelagert sind,
**dass** die Ladeeinrichtung (6) parallel zur Reihe der Stellplätze verfahrbar ist und einen Aufnahmebereich enthält, der eine Sammelpalette aufnimmt, auf die nacheinander von den Stellplätzen entnommene Schwerlastgüter mit Hilfe der Ladeeinrichtung (6) überführt werden, und
**dass** die Ladeeinrichtung (6) ausgestaltet ist, um eine beladene Sammelpalette an ein Ausgangslager zu überführen und an das Ausgangslager abzugeben.

2. Verfahren nach Anspruch 1, **dadurch gekennzeichnet, dass** die Ladeeinrichtung (6) ein Seitenstapler ist, der längs und quer verfahrbar ist.

3. Verfahren nach Anspruch 2, **dadurch gekennzeichnet, dass** die Ladeeinrichtung (6) eine in einer vertikalen Ebene bewegbare Aufnahmevorrichtung (7) enthält, mittels der die Schwerlastgüter vom Lagerplatz (1) aufgenommen und auf die Sammelpalette überführt werden.

4. Verfahren nach Anspruch 2, **dadurch gekennzeichnet, dass** die Ladeeinrichtung (6) eine Hubvorrichtung (11) enthält, mit der die Sammelpalette angehoben und an das Ausgangslager überführt werden kann.

5. Verfahren nach Anspruch 1, **dadurch gekennzeichnet, dass** der Lagerplatz (1) mehrere parallele Reihen von Paletten mit Schwerlastgütern enthält, von denen mittels der Ladeeinrichtung (6) einzelne Schwerlastgüter entnommen werden können.

6. Einrichtung zur Kommissionierung von langgestreckten Schwerlastgütern zur Durchführung eines Verfahrens nach Anspruch 1, bei dem eine Ladeeinrichtung (6) so ausgestaltet ist, dass sie Schwerlastgüter von Paletten entnehmen kann, die in einer oder mehreren Reihen palettenweise auf einem Lagerplatz (1) positioniert sind, **dadurch gekennzeichnet, dass** die Ladeeinrichtung (6) als Seitenstapler ausgebildet ist, welcher einen Aufnahmebereich enthält, wobei mit Hilfe einer Aufnahmevorrichtung (7) der Ladeeinrichtung (6) einzelne Schwerlastgüter von einer Palette des Lagerplatzes (1) abnehmbar sind, und die Aufnahmevorrichtung (7) ausgestaltet ist, um die Schwerlastgüter auf eine auf dem Aufnahmebereich angeordnete Sammelpalette zu überführen.

7. Einrichtung nach Anspruch 6, **dadurch gekennzeichnet, dass** die Ladeeinrichtung (6) Traversen (16, 17) zur Aufnahme einer Palette enthält und dass an der Ladeeinrichtung (6) eine Hubvorrichtung (11) vorgesehen ist, mit der eine mit Schwerlastgütern befüllte Sammelpalette von dem Aufnahmebereich abnehmbar und an ein Ausgangslager abgebbar ist.

8. Einrichtung nach Anspruch 6, **dadurch gekennzeichnet, dass** die Aufnahmevorrichtung (7) in einer vertikalen Ebene bewegbar ist, und an ihrem äußeren Ende eine Greifvorrichtung (8) enthält, die in wenigstens einer horizontalen Ebene drehbar ausgestaltet ist.

9. Einrichtung nach Anspruch 6, **dadurch gekennzeichnet, dass** die Aufnahmevorrichtung (7) in einem an dem Seitenstapler (6) angeordneten Drehlager (23) aufgenommen ist, über das die Aufnahmevorrichtung (7) in Umfangsrichtung verschwenkbar ist.

10. Einrichtung nach Anspruch 7, **dadurch gekennzeichnet, dass** die Traversen (16, 17) Führungen zur Aufnahme von unteren Querlatten oder U-förmigen Rahmen (9) einer Palette enthalten.
